# EUROPÄISCHE PATENTSCHRIFT

(11) **EP 0 926 410 B1**
(45) Veröffentlichungstag und Bekanntmachung des Hinweises auf die Patenterteilung: **05.11.2003**
(21) Anmeldenummer: 98890355.5
(22) Anmeldetag: 02.12.1998
(51) Int. Cl.: F16K 3/12, F16K 3/28, F16K 3/316

(54) **Absperrschieber**
Gate valve
Vanne d'arrêt

(30) Priorität: 15.12.1997 AT 210897
(43) Veröffentlichungstag der Anmeldung: 30.06.1999
(73) Patentinhaber: E. Hawle & Co. Flanschen- und Armaturenwerk, 4840 Vöcklabruck (AT)
(72) Erfinder: Pohn, Franz, 4840 Vöcklabruck (AT); Fellner, Alois, 4901 Ottnang (AT); Berger, Christian, 4650 Lambach (AT)
(74) Vertreter: Secklehner, Günter, Dr.

(56) Entgegenhaltungen:
- EP-A- 0 129 826
- EP-A- 0 146 112
- EP-A- 0 171 693
- DE-A- 2 037 476

## Beschreibung

Die Erfindung bezieht sich auf einen Absperrschieber mit einem Schiebergehäuse und einem Absperrkeil, wobei der Absperrkeil über seitlich abstehende Führungslaschen entlang quer zur Durchströmrichtung verlaufender Führungsnuten des Schiebergehäuses verschiebbar geführt ist und eine dichtende gummielastische Ummantelung aufweist.

Aus dem Dokument EP-A-0 171693 ist ein Absperrkeil eines Absperrschiebers bekannt, der mit seitlich abstehenden Führungslaschen versehen ist und über diese entlang quer zu einer Durchströmrichtung in einem Schiebergehäuse verlaufenden Führungsnuten verschiebbar geführt ist und eine dichtende gummi-elastische Ummantelung aufweist, die eine geschlossene Absperrkeilumhüllung ausbildet. Die Führungslaschen sind am Absperrkeil bezogen auf dessen Verschieberichtung hauptsächlich über, jedoch auch bis zur Höhe der Flächenmitte der in Durchströmrichtung auf die Verschiebeebene projizierten Sperrfläche des Absperrkeiles, angeordnet.

Gemäß der EP 0 146 112 A wurde auch schon ein Absperrkeil für Absperrschieber vorgeschlagen, der zum Korrosionsschutz allseitig mit einer gummielastischen Umhüllung versehen ist, zur seitlichen Führung hingegen an den Schmalseiten Führungsnuten bildet, die auf gehäusefesten Führungsleisten gleiten. Um die Gleiteigenschaften zu verbessern, wird zusätzlich in die Führungsnuten ein spezieller Gleitschuh eingesetzt, wobei verhältnismäßig lange Führungsnuten erforderlich sind, um eine entsprechende Stabilität der Abstützung zu erreichen. Auch hier ist aber auf Grund der Nutenanordnung ein belastungsbedingtes Schrägstellen des Keiles nicht zu vermeiden und die Verschleißanfälligkeit bleibt recht hoch, wozu wegen des nötigen formschlüssigen Gleitschuheinsatzes noch ein erheblicher Herstellungsmehraufwand in Kauf zu nehmen ist.

Der Erfindung liegt daher die Aufgabe zugrunde, einen Absperrschieber der eingangs geschilderten Art zu schaffen, der sich bei verhältnismäßig geringem Bauaufwand durch seinen hohen Korrosionsschutz, seine gute Gleitführung und vor allem auch durch seine Verschleißfestigkeit auszeichnet.

Die Erfindung löst die Aufgabe dadurch, daß zwei vergleichsweise kurze Führungslaschen am Absperrkeil mittig bezogen auf dessen Verschieberichtung in Höhe der Flächenmitte der in Durchströmrichtung auf die Verschiebeebene projizierten Sperrfläche des Absperrkeiles angeordnet sind und die Ummantelung des Absperrkeiles in an sich bekannter Weise eine geschlossene Absperrkeilumhüllung bildet.

Durch die gegenüber den herkömmlichen Absperrkeilen abwärts verlagerten Führungslaschen wird die Führung in die Höhe des Angriffspunktes der Druckkraftresultierenden des Keiles gesetzt und damit praktisch ohne Mehraufwand eine belastungsbedingte Schrägstellung des Keiles verhindert. Es genügt eine vergleichsweise kurze Keilführung, die dennoch zu einer hervorragenden Verschleißfestigkeit des Schiebersystems führt. Die führungsparallele Geradstellung des Keiles hat weiters die Leichtgängigkeit der Gleitführung zur Folge, da Klemmwirkungen u. dgl. fehlen, und die dadurch verringerten Betätigungsmomente steigern zusätzlich die Verschleißunanfälligkeit. Die geschlossene Ummantelung des Absperrkeiles schützt den Keilkörper, der aus Gußeisen, insbesondere aus Sphäroguß besteht, sicher vor Korrosion, welche Ummantelung zweckmäßigerweise aus einem gute Alterungs- und Temepraturbeständigkeitseigenschaften aufweisenden Kautschuk, wie EPDM (Äthylen-Propylen-Kautschuk) oder NBR (Nitrilkautschuk) besteht.

Um auch im Führungsbereich hohe Verschleißfestigkeit zu erreichen, sind auf die Führungslaschen Führungskappen aus verschleißfestem, temperaturbeständigem Kunststoff, beispielsweise POM (Polyoxymethylen) aufgesteckt, die den vorzeitigen Abrieb der Ummantelung im Bereich der Führungslaschen verhindern und bedarfsweise einfach ausgetauscht werden können.

In der Zeichnung ist der Erfindungsgegenstand beispielsweise näher veranschaulicht, und zwar zeigen
- Fig. 1 und 2: einen erfindungsgemäßen Absperrschieber in einem achsnormalen bzw. axialen Querschnitt, wobei sich der Absperrkeil jeweils in der linken Bildhälfte in Sperrstellung und in der rechten Bildhälfte in Offenstellung befindet, sowie
- Fig. 3: einen Querschnitt durch die Keilführung nach der Linie III-III der Fig. 1 größeren Maßstabes.

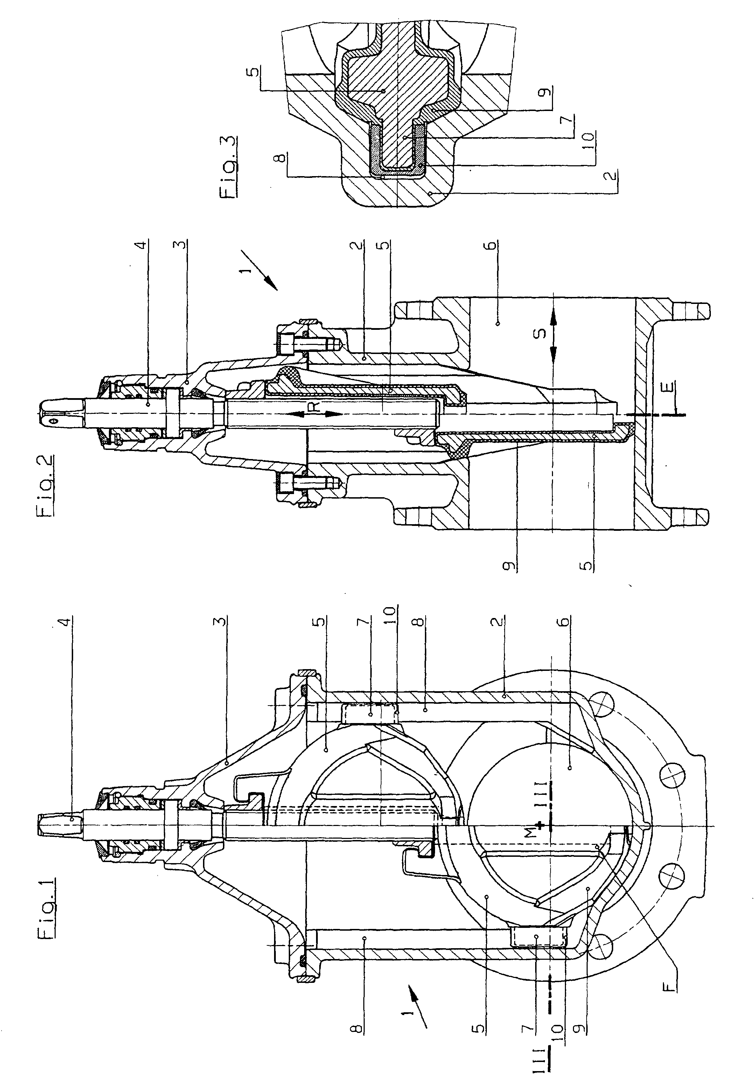

Ein Absperrschieber 1 umfaßt ein Schiebergehäuse 2 mit aufgesetztem Oberteil 3 sowie einen über eine im Oberteil 3 drehbar gelagerte Betätigungsspindel 4 schiebeverstellbaren Absperrkeil 5. Dieser Absperrkeil 5 läßt sich über die Betätigungsspindel 4 quer zu der vom Durchgang 6 des Gehäuses 2 bestimmten Durchströmrichtung S von einer unteren Sperrstellung (linke Hälfte der Fig. 1 und 2) in eine obere Offenstellung (rechte Hälfte der Fig. 1 und 2) bewegen, wobei der Absperrkeil 5 mittels zweier seitlich abstehender Führungslaschen 7 in seitliche, der Verschieberichtung R entlangverlaufende Führungsnuten 8 des Schiebergehäuses 2 eingreift. Die Führungslaschen 7 liegen dabei in Höhe der Flächenmitte M der in Durchströmrichtung S auf die Verschiebeebene E projizierte Sperrfläche F des Absperrkeiles 5, so daß die auf den Absperrkeil einwirkenden Druckkräfte des Strömungsmediums keine eine Schrägstellung mit sich bringenden Kippmomente ausüben und damit erhöhte Verschleißerscheinungen vermieden werden.

Als Korrosionsschutz ist der Absperrkeil 5 mit einer den ganzen Keilkörper umhüllenden Ummantelung 9 aus EPDM bzw. NBR versehen. Zusätzlich sind zur Verbesserung der Gleiteigenschaften und zur Erhöhung der Verschleißfestigkeit auf die Führungslaschen 7 Führungskappen 10 aus POM aufgesteckt.

## Patentansprüche

1. Absperrschieber (1) mit einem Schiebergehäuse (2) und einem Absperrkeil (5), wobei der Absperrkeil (5) über zwei seitlich abstehende vergleichsweise kurze Führungslaschen (7) entlang quer zur Durchströmrichtung (S) verlaufender Führungsnuten (8) des Schiebergehäuses (2) verschiebbar geführt ist und eine dichtende gummielastische Ummantelung (9) aufweist und wobei die Führungslaschen (7) am Absperrkeil (5), bezogen auf dessen Verschieberichtung (R), mittig in Bezug auf die Höhe der Flächenmitte (M) der in Durchströmrichtung (S) auf die Verschiebeebene (E) projizierten Sperrfläche (F) des Absperrkeiles (5) angeordnet sind und die Ummantelung (9) des Absperrkeiles (5) in an sich bekannter Weise eine geschlossene Absperrkeilumhüllung bildet.

2. Absperrschieber nach Anspruch 1, **dadurch gekennzeichnet, daß** auf die Führungslaschen (7) Führungskappen (10) aus verschleißfestem, temperaturbeständigem Kunststoff, beispielsweise POM (Polyoxymethylen) aufgesteckt sind.

## Claims

1. Gate valve (1) with a slide housing (2) and a shut-off wedge (5), which shut-off wedge (5) is slidably guided along guide grooves (8) of the slide housing (2) extending transversely to the flow direction (S) by two lateral, relatively short projecting guide tabs (7) and has a sealing rubber-elastic jacket (9), the guide tabs (7) being centrally disposed by reference to their sliding direction (R) relative to the height of the centre (M) of the shut-off face (F) of the shut-off wedge (5) projecting towards the sliding plane (E) in the flow direction (S), and the jacket (9) of the shut-off wedge (5) forms a closed shut-off wedge (5) casing in a manner known per se.

2. Gate valve as claimed in claim 1, **characterised in that** the guide tabs (7) are fitted with guide caps (10) made from a synthetic material resistant to wear and high temperatures, such as POM (polyoxymethylene).

## Revendications

1. Vanne d'arrêt (1) avec un boîtier de vanne (2) et un coin d'arrêt (5), où le coin d'arrêt (5) est guidé d'une manière déplaçable sur deux languettes de guidage (7) comparativement courtes, faisant saillie latéralement, le long de rainures de guidage (8) s'étendant transversalement à la direction de l'écoulement traversant (S) du boîtier de vanne (2) et présente une enveloppe d'étanchéité (9) d'une élasticité semblable à du caoutchouc, et où les languettes de guidage (7) sont disposées au coin d'arrêt (5), par rapport à la direction de déplacement (R) de celui-ci, au milieu par rapport à la hauteur du milieu de face (M) de la face d'arrêt (F) du coin d'arrêt (5) projetée dans la direction de l'écoulement traversant (S) sur le plan de déplacement (E), et l'enveloppe (9) du coin d'arrêt (5) forme d'une manière connue une enveloppe de coin d'arrêt fermée.

2. Vanne d'arrêt selon la revendication 1, **caractérisé en ce que** sont placés sur les languettes de guidage (7) des capuchons de guidage (10) en un matériau synthétique résistant à l'usure, résistant aux températures, par exemple en POM (polyoxyméthylène).
